# EUROPÄISCHE PATENTSCHRIFT

(11) **EP 0 945 799 B1**
(45) Veröffentlichungstag und Bekanntmachung des Hinweises auf die Patenterteilung: **03.07.2002**
(21) Anmeldenummer: 98250032.4
(22) Anmeldetag: 29.01.1998
(51) Int. Cl.: G06F 11/00

(54) **Verfahren und Einrichtung zum Verhindern der Einlagerung nicht mehr aktueller Datentelegramme aus einer Datenvorverarbeitung in die Speicher eines Rechners**
Method and system for avoiding storage of outdated messages from a data preprocessing device in the memory of a computer
Méthode et système pour empêcher le stockage de messages non-actuels d'un préprocesseur de données dans la mémoire d'un ordinateur

(43) Veröffentlichungstag der Anmeldung: 29.09.1999
(73) Patentinhaber: SIEMENS AKTIENGESELLSCHAFT, 80333 München (DE)
(72) Erfinder: Eue, Wolfgang, 38162 Cremlingen (DE)

(56) Entgegenhaltungen:
- US-A- 4 631 701
- DJEMAL H. ABAWAJY: "Orphan Problems and Remedies In Distributed Systems" OPERATING SYSTEMS REVIEW (SIGOPS)., Bd. 27, Nr. 1, Januar 1993, NEW YORK US, Seiten 27-32, XP000336448

## Beschreibung

Die Erfindung bezieht sich auf ein Verfahren nach dem Oberbegriff des Patentanspruches 1 sowie auf Einrichtungen zur Realisierung eines solchen Verfahrens.

Zur Steuerung sicherheitsrelevanter Prozesse z. B. in der Eisenbahnsignaltechnik werden vielfach signaltechnisch sichere Rechner verwendet. Diese Rechner sind mehrkanalig aufgebaut und arbeiten die gleichen Prozeßgeschehen nach gleichen oder verschiedenen Programmen unabhängig voneinander ab. Durch laufenden Vergleich der auf den internen Rechnerbussen liegenden Daten und Adressen und/oder durch Ergebnisvergleich wird ein störungsbedingtes Auseinanderlaufen der Verarbeitungsergebnisse frühzeitig detektiert. Die signaltechnisch sicheren Rechner können in sich fail-safe ausgeführt sein oder es kann sich um gebräuchliche Kaufrechner handeln, wobei die fail-safe-Eigenschaft eines solchen Rechnersystems durch eine spezielle Verfahrenssicherung gewährleistet wird.

Zur Entlastung solcher signaltechnisch sicheren Rechner werden die von außen anliegenden Prozeßdaten gelegentlich einer Datenvorverarbeitung zugeführt. Die Datenvorverarbeitung prüft z. B., ob die ihr zugeführten Daten bestimmten verabredeten Bedingungen genügen z. B. hinsichtlich des Telegrammaufbaus, des Telegramminhaltes nach Nutz- und Prüfdaten und hinsichtlich der Plausibilität der übermittelten Daten. Die Einrichtungen zur Datenvorverarbeitung sind regelmäßig nicht fail-safe ausgeführt. Zwar sind sie nicht in der Lage, die ihnen zugeführten zunächst korrekten Eingangsdaten in von ihrem Bedeutungsinhalt beliebig falsche Datentelegramme umzusetzen, ohne daß solche verfälschte Datentelegramme vom sicheren Rechner als solche erkannt werden; es kann jedoch nicht ausgeschlossen werden, daß die Vorverarbeitung dem sicheren Rechner z. B. durch fehlerhafte Adressierung ihrer änderbaren Speicher Datentelegramme anbietet, die nicht dem aktuellen Prozeßzustand entsprechen sondern einem älteren Prozeßzustand, der bereits zu einem früheren Zeitpunkt an den sicheren Rechner gemeldet wurde. Solche tatsächlich nicht mehr aktuellen Datentelegramme können üblicherweise vom sicheren Rechner nicht als irrelevant erkannt werden, weil sie dem verabredeten Telegrammformat und den festgelegten Prüfbedingungen genügen. Abhilfe könnte hier lediglich die Beiordnung von Zeitstempeln oder nach einem festgelegten Algorithmus generierte, den zu übermittelnden Telegrammen beigegebene und vom sicheren Rechner überprüfbare Zusatzkennungen schaffen; der Sicherungsanhang der zu übermittelnden Nutzdaten wäre dann auch über diese Zeitstempel bzw. Zusatzkennungen zu bilden. Die Übermittlung solcher zusätzlicher Kennungen zum Bewerten der Aktualität von Datentelegrammen beeinträchtigt durch Vergrößerung des Datenvolumens und damit der Übertragungszeit das On-line-Verhalten des für die Prozeßsteuerung verwendeten sicheren Rechners in ungünstiger Weise.

Aufgabe der Erfindung ist es, ein nach dem Oberbegriff des Patentanspruches 1 ausgebildetes Verfahren sowie dieses Verfahrens umsetzende Einrichtungen anzugeben, mit dem bzw. mit denen ohne Beiordnung von Zeitstempeln und Zusatzkennungen zu den Telegrammen sichergestellt werden kann, daß keine nicht mehr aktuellen Telegramme vom sicheren Rechner verarbeitet werden.

Die Erfindung löst diese Aufgabe durch die Anwendung der kennzeichnenden Merkmale des Patentanspruches 1 bzw. der Patentansprüche 13 und 14. Danach werden ereignisgesteuert und/oder in vorgegebenen Zeitintervallen die änderbaren Schreib-/Lese-Speicher der Datenvorverarbeitung mit Fülldaten beschrieben, die aufgrund ihrer Menge dafür sorgen, daß etwaige dort noch gespeicherte Telegramme überschrieben bzw. aus den Speichern herausgeschoben werden; danach gibt es in der Datenvorverarbeitung keine den verabredeten Darstellungsbedingungen von Prozeßdaten genügenden Datentelegramme mehr, die an den sicheren Rechner übertragen werden und dort ggf. zu Fehlinterpretationen führen könnten. Durch Rücklesen der Fülldaten wird gewährleistet, daß tatsächlich alle eventuell in der Datenvorverarbeitung verbliebenen Daten überschrieben oder aus den Speichern der Datenvorverarbeitung herausgeschoben wurden.

Vorteilhafte Ausgestaltungen und Weiterbildungen des erfindungsgemäßen Verfahrens bzw. der erfindungsgemäßen Einrichtungen sind in den auf die unabhängigen Ansprüche 1 sowie 13 und 14 zurückbezogenen Unteransprüchen angegeben.

So sollen nach der Lehre des Anspruches 2 während des Testbetriebes zum Aufdecken und/oder Unwirksammachen älterer Datentelegramme die Schreib-/Lese-Speicher der Datenvorverarbeitung in einen sogenannten Füllmodus umstrukturiert werden, in dem ein serielles Beschreiben mit Fülldaten und anschließendes serielles Lesen der eingeschriebenen Daten möglich ist. Damit wird erreicht, daß auf einfache Weise sämtliche änderbaren Speicher in der gewünschten Weise manipuliert werden können.

Dabei ist es nach der Lehre des Anspruches 3 von Vorteil, die Fülldaten so zu gestalten, daß sie verschieden sind von den Daten, die die Datenvorverarbeitung selbst generieren könnte; anderenfalls bestände Gefahr, daß die Datenvorverarbeitung störungsbedingt Daten bildet, die den vom sicheren Rechner erwarteten Fülldaten entsprechen, so daß es tatsächlich unerkannt zum Überschreiben oder Herausschieben von noch gespeicherten Telegrammen kommt.

Zwei besonders leicht zu realisierende Darstellungen für die Fülldaten sind in den Ansprüchen 4 und 5 angegeben; diese Darstellungen der Fülldaten machen es für den sicheren Rechner zuverlässig möglich, zwischen Nutz- und Fülldaten unterscheiden zu können.

Die Aufnahme des Testbetriebes ist nach der Lehre des Anspruches 6 davon abhängig zu machen, daß keine aktuellen Daten mehr zur Übertragung an den sicheren Rechner anstehen. Diese Daten würden sonst durch die Fülldaten überschrieben bzw. aus den änderbaren Speichern der Datenvorverarbeitung herausgeschoben werden und damit für die Steuerung des Prozeßablaufes verloren gehen.

Die Merkmale der Ansprüche 7 und 8 beziehen sich auf das Eintreffen aktueller Daten während des Testbetriebes; diese führen zum Abbruch des aktuellen Testbetriebes und damit zur raschestmöglichen Verarbeitung der neuen Daten.

Um den Betriebszustand und das Betriebsverhalten der änderbaren Speicher der Datenvorverarbeitung zu überprüfen, sieht die Lehre des Anspruches 9 vor, das vollständige Füllen der Schreib-/Lese-Speicher der Datenvorverarbeitung mit Fülldaten zu überwachen, d. h. festzustellen, ob diese Speicher erst mit dem Einschreiben einer vom Fassungsvermögen der Speicher bestimmten Menge von Fülldaten vollständig gefüllt sind oder bereits früher oder ob der Zustand "Speicher Voll" nicht wie erwartet erreicht wird. So läßt sich seitens des sicheren Rechners eine Aussage über ein mögliches Fehlverhalten der Datenvorverarbeitung unabhängig vom Rücklesen der Fülldaten machen.

Weil aus Zeitgründen nicht nach jeder Übermittlung eines Telegrammes an den sicheren Rechner ein Beschreiben der Schreib-/Lese-Speicher der Datenvorverarbeitung mit Fülldaten und das Rücklesen der gespeicherten Daten durch den sicheren Rechner stattfinden kann, ist nach der vorteilhaften Lehre des Anspruches 10 vorgesehen, außerhalb des Testbetriebes eine Ausschlußliste zu führen, in der alle seit Abschluß des letzen Testes in den sicheren Rechner übernommenen Telegramme gespeichert und mit den jeweils vorher eingelaufenen Telegrammen auf Ausschluß geprüft werden. Abhängig von der Größe des Speichers, der für die Ausschlußliste zur Verfügung steht und der Häufigkeit der Telegramme lassen sich so für eine bestimmte Zeitspanne Telegrammwiederholungen vom sicheren Rechner her zuverlässig erkennen und in ihrer Auswirkung unwirksam machen. Konnte ein Fülltest erfolgreich beendet werden, so berechtigt dieses Ergebnis zum Löschen der Ausschlußliste.

Nach der Lehre des Anspruches 11 ist vorgesehen, in der Ausschlußliste anstelle kompletter Datentelegramme nur daraus abgeleitete Daten zu speichern, wobei diese Daten gemäß Anspruch 12 aus Prüfsummen über die Datentelegramme gebildet werden sollen. Durch diese Maßnahme wird der Speicheraufwand für die Ausschlußliste erheblich reduziert mit der Folge, daß der zeitliche Abstand zwischen den Testbetrieben vergrößert werden kann.

Die Ansprüche 13 und 14 beschreiben die technische Ausgestaltung zweier Einrichtungen zur Anwendung des erfindungsgemäßen Verfahrens. Dabei bezieht sich die Ausführungsform des Anspruches 13 auf die Organisation der Schreib-/Lese-Speicher der Datenvorverarbeitung in Art eines FIFO's oder LIFO's und die des Anspruches 14 auf die Organisation der entsprechenden Speicher nach Art eines Schieberegister. In beiden Fällen ist ein serielles Beschreiben der Speicher mit Fülldaten und ein serielles Auslesen dieser Daten zu Prüfzwecken möglich; allerdings unterscheiden sich die Ausleseprozeduren in Abhängigkeit von der Ausgestaltung der Schreib-/Lese-Speicher während des Testbetriebes. Die Funktion des Testbetriebes ist dabei entweder in einem vorzugsweise sicheren Rechner implementiert oder aber es gibt einen Überprüfungsautomaten außerhalb des sicheren Rechners, der diese Aufgabe oder zumindest einen Teil dieser Aufgaben wahrnimmt. Wichtig ist, daß die Funktion des Testbetriebes außerhalb der Datenvorverarbeitung stattfindet, deren mögliches Fehlverhalten aufgezeigt werden soll.

Nach der Lehre des Anspruches 15 soll die Datenvorverarbeitung den vorzugsweise sicheren Rechner davon unterrichten, daß zur Zeit keine regulär zur Übermittlung anstehenden Daten mehr vorhanden sind. Auf diese Art und Weise wird der sichere Rechner davon unterrichtet, daß für den Fall der Aufnahme des Testbetriebes in der Datenvorverarbeitung keine noch zur Übertragung anstehenden aktuellen Datentelegramme vernichtet werden.

Mit dem Lesen des letzten Speicherplatzes der Datenvorverarbeitung kann die Datenvorverarbeitung gemäß Anspruch 16 ihre Speicher wieder in den Normalzustand umstrukturieren, in dem sie für die Funktion der Datenvorverarbeitung benötigt werden; hierzu bedarf es dann keines zusätzlichen Anstoßes von außen.

Der vorzugsweise sichere Rechner oder der Überprüfungsautomat kann gemäß Anspruch 17 die Datenvorverarbeitung aber auch vom erfolgreichen Abschluß des Testbetriebes unterrichten; die Datenvorverarbeitung kann daraufhin - sofern sie nicht selbst das vollständige Auslesen ihrer Speicherplätze erkennt - die Speicher wieder in ihren normalen Zustand umstrukturieren.

Nach der bevorzugten Ausführungsform des Anspruches 18 soll die Datenvorverarbeitung durch einen Mikrocontroller dargestellt sein. Für solche programmgesteuerten Einrichtungen ist es besonders wichtig, eine Funktionskontrolle zum Feststellen eines etwaigen Fehlverhaltens durchzuführen, weil diese Einrichtungen ausfallbedingt durchaus in der Lage sind, ältere nicht mehr aktuelle Datentelegramme einzulagern und dann möglicherweise wieder auszugeben.

Bei Verwendung eines Mikrocontrollers für die Datenvorverarbeitung ist nach der Lehre des Anspruches 19 von Vorteil, auch die CPU-Register mit Fülldaten zu beschreiben und auszulesen, um auch dort etwaige Fehlfunktionen erkennen zu können und/oder unwirksam machen zu können.

Die Merkmale des Anspruches 20 beinhalten die technische Ausführung der Verfahrensausgestaltung nach Anspruch 10, wonach außerhalb des Testbetriebes Fehlfunktionen der Datenvorverarbeitung über eine Ausschlußliste erkannt werden sollen.

Zur Entlastung des vorzugsweise sicheren Rechners könnte die Funktion der Ausschlußlistenverwaltung gemäß Anspruch 21 ganz oder teilweise aus dem sicheren Rechner ausgelagert werden. Bei vollständiger Entlastung des sicheren Rechners hört die Ausschlußlistenverwaltung die von der Datenvorverarbeitung an den sicheren Rechner abgegebenen Datentelegramme ständig mit und zeigt dem sicheren Rechner eine Telegrammwiederholung an. Der sichere Rechner oder der Überprüfungsautomat zeigen der Ausschlußlistenverwaltung an, daß aufgrund eines erfolgreichen Fülltests die Ausschlußliste gelöscht werden darf.

Für den Fall, daß der vorzugsweise sichere Rechner oder der Überprüfungsautomat außerhalb des Testbetriebes eine Ausschlußliste führen, ist sicherzustellen, daß die dort gespeicherten Telegramme gelöscht werden, bevor reguläre Telegramme zugeführt werden, die betriebsbedingt mit bereits abgespeicherten Telegrammen übereinstimmen könnten. Ein solcher Fall liegt z. B. im Bahnbetrieb vor, wenn ein Fahrzeug beim Passieren einer streckenseitigen Einrichtung von dort mit Daten versorgt wird und anschließend seine Fahrrichtung wechselt. Es passiert dann erneut die Streckeneinrichtung und empfängt nochmals die ihm bereits bekannten Daten, die aber nach wie vor Gültigkeit haben können, weil sie z. B. bestimmte Ortspositionen beschreiben. Für diesen Fall sehen die Merkmale des Anspruches 22 vor, die auf dem Fahrzeug geführte Ausschlußliste zu löschen, sobald das Fahrzeug seine Fahrrichtung umkehrt; das ist z. B. immer der Fall beim Ausfahren des Fahrzeugs aus einem Kopfbahnhof. Beim Halt in einem Kopfbahnhof steht auch genügend Zeit zur Verfügung, die Speicher der Datenvorverarbeitung mit Fülldaten zu beschreiben, diese anschließend zu Testzwecken wieder auszulesen und die Ausschlußliste zu löschen. Da die Berechtigung zum Löschen der Ausschlußliste nur nach erfolgreichem Abschluß eines Fülltests besteht, ist letzterer vorher durchzuführen.

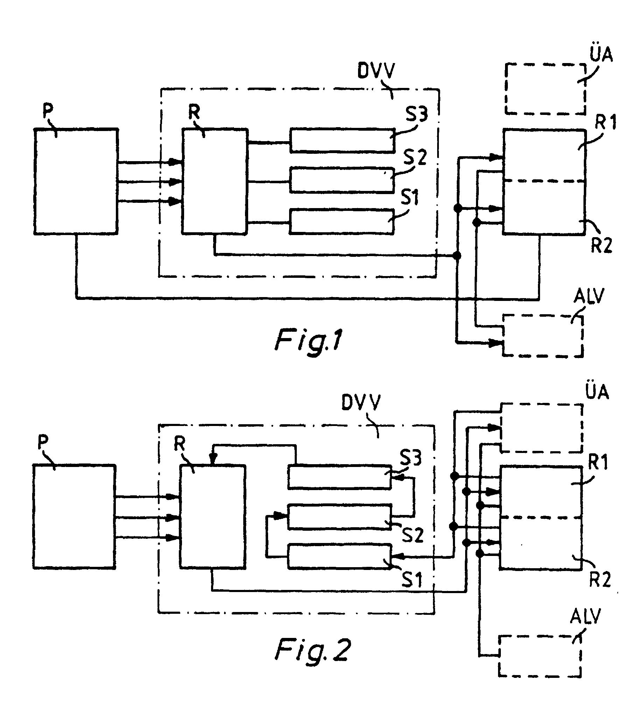

Die Erfindung ist nachstehend anhand eines in der Zeichnung schematisch dargestellten Ausführungsbeispieles näher erläutert. Die Zeichnung zeigt in
- Figur 1: die Anordnung und Ausbildung einer Datenvorverarbeitung zwischen Prozeßperipherie und steuerndem Rechner außerhalb des Testbetriebes und in
- Figur 2: die Anordnung und Ausbildung der gleichen Datenvorverarbeitung während des Testbetriebes; einander entsprechende Komponenten in den Figuren sind gleichartig bezeichnet worden.

Die Zeichnung zeigt schematisch einen beliebigen Prozeß P wie er von einem Rechner R1, R2 zu steuern und zu überwachen ist. Der zu steuernde Prozeß P kann z. B. eine Bahnanlage sein mit ihren ortsfesten Elementen wie Weichen, Signalen und Bahnübergängen und ihren ortsbeweglichen Elementen wie sie vorzugsweise durch Züge dargestellt sind. Der Rechner R1, R2 ist im dargestellten Ausführungsbeispiel in vorteilhafter Weise als zweikanaliger sicherer Rechner ausgeführt. Beide Kanäle überwachen das Prozeßgeschehen und bearbeiten die Prozeßzustände unabhängig voneinander. Sie vergleichen sich laufend auf Übereinstimmung und wirken gemeinsam auf den zu steuernden Prozeß ein. Zwischen dem Prozeß und dem sicheren Rechner ist mindestens eine Datenvorverarbeitung DVV installiert zur Aufbereitung von Prozeßdaten und zur Weitergabe dieser Prozeßdaten in aufbereiteter Form an den sicheren Rechner. Die Datenvorverarbeitung DVV ist als Mikrocontroller ausgebildet mit einem Rechnerbaustein R, der eine CPU, mindestens einen Programmspeicher und mehrere änderbare Schreib-/Lese-Speicher S1 bis S3 beinhaltet. Einzelne dieser Speicher sind als Arbeitsspeicher, andere als CPU-Register organisiert. Die Datenvorverarbeitung erarbeitet aus den ihr zugeführten Prozeßdaten nach den in ihr implementierten Programmen modifizierte Daten und übermittelt diese entweder von sich aus oder auf Anforderung des sicheren Rechners an diesen. Die Daten werden dabei telegrammweise übermittelt, wobei diese in an sich bekannter Weise Nutzdaten und über diese Nutzdaten gebildete Prüfdaten enthalten, die es dem sicheren Rechner ermöglichen, etwaige Übertragungsfehler auf dem Weg zwischen dem Prozeß und dem sicheren Rechner zuverlässig zu erkennen.

Mit dem Übermitteln von Daten an den sicheren Rechner werden diese Daten in den Arbeitsspeichern der Datenvorverarbeitung entweder gelöscht oder die CPU der Datenvorverarbeitung merkt sich, daß die betreffenden Daten gelesen wurden und damit für die Zukunft irrelevant sind. Durch ein Fehlverhalten der Datenvorverarbeitung ist es denkbar, daß die vom sicheren Rechner ausgelesenen Daten sofort wieder in den Arbeitsspeicher eingeschrieben werden oder daß sich die CPU die Irrelevanz bereits gelesener Daten nicht merkt. Als Folge davon steht zu erwarten, daß die im Arbeitsspeicher der Datenvorverarbeitung abgelegten, nicht mehr aktuellen Daten zu einem späteren Zeitpunkt erneut an den sicheren Rechner übermittelt werden können (Datenwiederholung). Dieser prüft die ihm übermittelten Daten nur auf das Einhalten vorgegebener Bedingungen; da diese auch durch die älteren Daten erfüllt werden, würde er die älteren Daten akzeptieren, obgleich sie nicht dem aktuellen Prozeßgeschehen entsprechen.

Die Erfindung sieht vor, in einem bestimmten Bearbeitungsvorgang, dem sogenannten Testbetrieb, alle dann möglicherweise noch in der Datenvorverarbeitung vorhandenen älteren Daten aus dieser zu entfernen. Zu diesem Zweck erhält der sichere Rechner R1, R2 von der Datenvorverarbeitung z. B. im Anschluß an die Übermittlung eines Datentelegrammes eine Information, die besagt, daß nach Kenntnis der Datenvorverarbeitung keine weiteren Daten zur Übermittlung anstehen. Dies ist die Voraussetzung dafür, daß der sichere Rechner ohne Verlust an eventuell in der Datenvorverarbeitung noch vorhandene aktuelle Datentelegramme auf die Schreib-/Lese-Speicher der Datenvorverarbeitung im Sinne des Entfernens aller dort gespeicherten Daten einwirken kann. Ob er im Einzelfall tatsächlich auf die Datenvorverarbeitung einwirkt und einen Testbetrieb zum Aufdecken bzw. Unwirksammachen eines angenommenen Fehlverhaltens einleitet, ist damit nicht unbedingt gesagt, weil nach einer noch zu erläuternden besonders vorteilhaften Ausgestaltung der Erfindung ein solcher Testbetrieb nicht unbedingt nach jedem an den sicheren Rechner übermittelten Datentelegramm sondern möglicherweise nur in größeren zeitlichen Abständen erforderlich ist.

Im nachfolgenden ist angenommen, daß der sichere Rechner auf die Mitteilung der Datenvorverarbeitung, daß zur Zeit kein Telegramm zur Übermittlung an den sicheren Rechner ansteht, den erfindungsgemäß vorgesehenen Testbetrieb einleitet. Hierzu übermittelt der sichere Rechner dem Mikrocontroller der Datenvorverarbeitung ein Signal oder eine Kennung, die diesen von der bevorstehenden Aufnahme des Testbetriebes unterrichtet. Als Folge davon strukturiert der Mikrocontroller der Datenvorverarbeitung seine änderbaren Speicher (Schreib-/Lese-Speicher) in Art eines Schieberegister oder eines FIFO's oder LIFO's um, indem er sie in Serie schaltet. Die änderbaren Speicher beinhalten dabei die Arbeitsspeicher des Mikrocontrollers und vorzugsweise auch die CPU-Register des Mikrocontrollers. Die Reihenschaltung der Arbeitsspeicher geschieht vorzugsweise programmgesteuert durch die CPU des Mikrocontrollers. Während des danach beginnenden Testbetriebes gibt die Datenvorverarbeitung ihre eigentliche Wirkfunktion auf.

Für den Testbetrieb beschreibt der sichere Rechner die änderbaren Speicher der Datenvorverarbeitung mit Fülldaten. Die Menge dieser Fülldaten wird durch das Fassungsvermögen der Speicher der Datenvorverarbeitung bestimmt. Am Ende der Schreibphase des Testbetriebes sind alle zu Beginn des Testbetriebes in den Schreib-/Lese-Speichern der Datenvorverarbeitung gegebenenfalls noch gespeicherten Daten entweder aus den Speichern herausgeschoben worden oder aber sie sind durch die Fülldaten überschrieben worden. Damit steht fest, daß keine alten Daten mehr in den Schreib-/Lese-Speichern der Datenvorverarbeitung vorhanden sind; ein möglicherweise anzunehmendes Fehlverhalten der Datenvorverarbeitung durch Telegrammwiederholung wird durch das Entfernen etwaiger gespeicherter älterer Telegramme während des Testbetriebes zu diesem Zeitpunkt ausgeschlossen.

Diese Annahme trifft aber nur zu, wenn sichergestellt ist, daß das Beschreiben der änderbaren Speicher der Datenvorverarbeitung auch tatsächlich in der Weise stattgefunden hat wie vom sicheren Rechner gewollt. Bei dem angenommenen Fehlverhalten der Datenvorverarbeitung muß jedoch auch damit gerechnet werden, daß das Einschreiben von Fülldaten durch den sicheren Rechner in die Schreib-/Lese-Speicher der Datenvorverarbeitung nicht unbedingt so vonstatten geht wie gewünscht; vielmehr muß auch hier mit einem Fehlverhalten gerechnet werden, wobei z. B. bestimmte Speicherplätze während des Schreibvorganges übersprungen werden oder einzelne Speicherplätze mehrfach beschrieben werden. Aus diesem Grunde sollen nach der Lehre der vorliegenden Erfindung die während des Testbetriebes in die flüchtigen Speicher der Datenvorverarbeitung eingelesenen Fülldaten in einer sich an die Schreibphase anschließende Lesephase wieder ausgelesen und die ausgelesenen Daten mit den vom sicheren Rechner generierten ursprünglichen Fülldaten verglichen werden. Erst wenn dieser Vergleich zeigt, daß die in den Schreib-/Lese-Speichern der Datenvorverarbeitung abgelegten Daten den vom sicheren Rechner generierten Fülldaten entsprechen, und zwar in allen überprüften Schreib-/Lese-Speichern, kann der sichere Rechner davon ausgehen, daß in diesen Speichern keine älteren Daten mehr vorhanden sind, die zur Unzeit an ihn übermittelt werden könnten.

Als Fülldaten kommen insbesondere solche Daten in Frage, die in ihrer Folge verschieden sind von den Daten, die die CPU der Datenvorverarbeitung selbst generieren könnte. Solche Daten können z. B. durch eine Aufeinanderfolge unterschiedlicher Primzahlen dargestellt sein oder aber, was technisch weniger aufwendig machbar ist, durch eine Aufeinanderfolge unterschiedlicher Zahlen in einem für den regulären Betrieb der Datenvorverarbeitung nicht verwendeten Zahlensystem, beispielsweise dem Zahlensystem zur Basis 7 oder 11. Durch Verwendung solcher Fülldaten, die z. B. vom sicheren Rechner eindeutig wiedererkannt werden können, ist sichergestellt, daß die Datenvorverarbeitung während des Testbetriebes nicht aufgrund einer Fehlfunktion Daten generiert und an den sicheren Rechner übermittelt, die diesem nur das Vorhandensein der erwarteten Fülldaten vortäuschen. Ein solcher Fall könnte ansonsten angenommen werden, wenn der sichere Rechner die möglicherweise in den änderbaren Speichern der Datenvorverarbeitung gespeicherten Daten durch Zuführen von Taktimpulsen lediglich aus diesen Speichern herausschiebt. Das Übermitteln von Leerdaten an den sicheren Rechner infolge eines möglichen Fehlverhaltens der Datenvorverarbeitung anstelle der beim Füllen seiner Speicher tatsächlich eingeschriebenen Leerdaten würde vom sicheren Rechner nicht als Fehlverhalten der Datenvorverarbeitung erkannt werden können.

Um schon frühzeitig eine Information über Fehlfunktionen in der Datenvorverarbeitung zu erhalten, ist es zweckmäßig, daß die Datenvorverarbeitung ein Speicher-voll-Signal erzeugt und an den sicheren Rechner abgibt. Signalisiert die Datenvorverarbeitung schon "Speicher-voll" bevor die dem Fassungsvermögen der Schreib-/Lese-Speicher entsprechende Menge von Fülldaten eingelesen wurde, so ist die Fehlfunktion der Datenvorverarbeitung für den sicheren Rechner ganz ohne Lesen der Fülldaten aufgedeckt. Gibt bei einer anderen Art der Fehlfunktion die Datenvorverarbeitung auch dann, wenn eigentlich das Speicher-voll-Signal erwartet wird, dieses nicht ab, so ist auch hier die Fehlfunktion der Datenvorverarbeitung aufgedeckt. Um Zeit zu sparen, kann dann auf das Lesen der Fülldaten verzichtet werden.

Um frühzeitig eine Information über das Ende des Testbetriebs zu erhalten, ist es zweckmäßig, daß die Datenvorverarbeitung ein Speicher-leer-Signal erzeugt. Wird das mit dem Einschreiben des ersten Fülldatums inaktiv gewordene Speicher-leer-Signal mit dem Lesen des letzten Fülldatums wieder aktiv, so kann die Datenvorverarbeitung selbständig erkennen, daß der Testbetrieb abgeschlossen ist und die Datenvorverarbeitung kann daraufhin ihre Schreib-/Lese-Speicher wieder in den Normalzustand umstrukturieren, den diese Speicher einnehmen, damit der als Datenvorverarbeitung verwendete Mikrocontroller die Funktion der Vorverarbeitung wieder wahrnehmen kann. Der sichere Rechner kann die Datenvorverarbeitung aber auch gesondert vom erfolgreichen Abschluß des Testbetriebes unterrichten und sie damit auffordern, ihre Speicher wieder umzustrukturieren und in der Bearbeitung der ihr zugewiesenen Aufgaben fortzufahren.

Maximale Sicherheit gegen das ungewollte Stehenbleiben von bereits in den sicheren Rechner übernommenen Datentelegrammen in der Datenvorverarbeitung wird erreicht, wenn nach jedem Abruf eines zur Übernahme anstehenden regulären Datentelegrammes ein eventuell stehengebliebenes und damit irreguläres Datentelegramm vom sicheren Rechner her durch rücklesbare Fülldaten überschrieben wird. Dies erfordert jedoch einen erheblichen zeitlichen Aufwand und ist daher meist nicht machbar. Vielmehr wird der sichere Rechner den Testbetrieb vorzugsweise in Zeiten der Ruhe, in denen keine Datentelegramme zur Übernahme anstehen, vornehmen und/oder die Datenvorverarbeitung innerhalb vorgegebener maximaler Zeitspannen dem Testbetrieb unterziehen. Um sicherzustellen, daß in der Zwischenzeit keine Datentelegramme mehrfach in den sicheren Rechner übernommen werden, führt der sichere Rechner in besonders vorteilhafter Weise außerhalb der Zeiten, in denen der Testbetrieb stattfindet, eine sogenannte Ausschlußliste, in die sämtliche von der Datenvorverarbeitung an ihn übermittelten Telegramme eingeschrieben werden. Jedes neu übermittelte Datentelegramm wird gegen alle in der Liste bereits gespeicherten Telegramme auf Ausschluß geprüft. Wird Übereinstimmung zwischen einem aktuell eingelesenen und einem bereits in der Liste abgespeicherten Telegramm festgestellt, so wird das aktuell eingelesene Telegramm gegebenenfalls unter Abgabe einer Fehlermeldung verworfen, weil es sich hierbei offensichtlich um ein älteres, fehlerbedingt aus der Datenvorverarbeitung angeliefertes Telegramm handelt. Nur solche Telegramme, die erfolgreich auf Ausschluß geprüft worden sind, werden vom sicheren Rechner akzeptiert und weiterbehandelt. Die in der Ausschlußliste des sicheren Rechners aufgelisteten Datentelegramme werden gelöscht, sobald der sichere Rechner einen erneuten Testbetrieb für die Datenvorverarbeitung erfolgreich abgeschlossen hat.

Da die außerhalb des Testbetriebes einlaufenden Datentelegramme auf Ausschluß geprüft werden, muß die z. B. im sicheren Rechner geführte Ausschlußliste gelöscht und gegebenenfalls eine neue Ausschlußliste aufgebaut werden, wenn zu erwarten steht, daß dem sicheren Rechner von der Datenvorverarbeitung reguläre, also nicht auf einem Fehlverhalten der Datenvorverarbeitung beruhende inhaltlich übereinstimmende Datentelegramme zugeführt werden können. Ein solcher Fall ist im Eisenbahnwesen z. B. dann gegeben, wenn es sich bei den über die Datenvorverarbeitung einzulesende Datentelegrammen um Daten einer streckenseitigen Informationsübertragungseinrichtung an ein vorüberlaufendes Fahrzeug handelt und dieses Fahrzeug nach dem Passieren der Übertragungseinrichtung seine Fahrrichtung umkehrt. Dies ist u.a. in Kopfbahnhöfen der Fall. Ein Fahrzeug passiert dabei z. B. ein kurz vor der Bahnhofseinfahrt angeordnetes Gleisgerät zur Übermittlung eines Ortskennzeichens erst in der einen und dann in der anderen Richtung. Um auch nach Fahrrichtungsumkehr die Informationen des Gleisgerätes auf dem Fahrzeug nutzen zu können, müssen die bei Einfahrt des Zuges in den Bahnhof eingelesenen Daten des Gleisgerätes vor der Ausfahrt, konkret vor dem erneuten Befahren des Streckengerätes, in der Ausschlußliste gelöscht werden. Das ist am einfachsten dadurch möglich, daß der sichere Rechner, der sich in diesem Falle auf dem betreffenden Fahrzeug befindet, bei Halt des Fahrzeugs im Bahnhof den Testbetrieb für die Datenvorverarbeitung aufnimmt und bei erfolgreichem Abschluß die bei ihm geführte Ausschlußliste löscht. Um bei vorhandener Tiefe des Speichers für eine Ausschlußliste möglichst viele Daten speichern zu können und für die Ausschlußprüfung vorzuhalten, kann es von Vorteil sein, dort nicht die eigentlichen Datentelegramme, sondern aus diesen abgeleitete, weniger aufwendige Daten wie z.B. Prüfdaten über die Datentelegramme abzuspeichern und diese dann später mit entsprechend modifizierten Daten aktueller Telegramme auf Ausschluß zu prüfen.

Bei dem vorstehend näher erläuterten Ausführungsbeispiel der Erfindung ist der sichere Rechner dazu eingerichtet, sowohl die Fülldaten bereitzustellen und sie für einen Vergleich zurückzulesen als auch die Ausschlußliste zum Aufdecken von Telegrammwiederholungen außerhalb des Testbetriebes zu führen. Es kann von Vorteil sein, den sicheren Rechner mindestens von Teilen dieser Test- bzw. Prüffunktionen zu entlasten. Die Fülldaten können hierzu extern zur Verfügung gestellt werden und extern oder intern im sicheren Rechner mit den ausgesandten Fülldaten verglichen werden. In der Zeichnung ist zum alternativen Ausgeben von Fülldaten und zum alternativen Vergleichen der in die Schreib-/Lese-Speicher der Datenvorverarbeitung eingeschriebenen Fülldaten ein gepunktet angedeuteter Überprüfungsautomat ÜA vorgesehen. Ob die Testfunktion im sicheren Rechner oder extern implementiert ist, ist von der Funktion her gleichgültig; wichtig ist nur, daß sie nicht in der Datenvorverarbeitung realisiert ist, deren Funktionsverhaltung annahmegemäß fehlerhaft sein kann. Veranlaßt der Überprüfungsautomat das Generieren und Ausgeben der Fülldaten an die Datenvorverarbeitung und realisiert der sichere Rechner den Vergleich der rückgelesenen mit den ausgegebenen Daten oder umgekehrt, so liest die den Datenvergleich durchführende Komponente die von der jeweils anderen Komponente ausgegebenen Fülldaten für den späteren Vergleich mit, sofern sie nicht bereits vorab über die auszugebenden Fülldaten unterrichtet ist. Der Überprüfungsautomat kann auch sowohl zur Ausgabe von Fülldaten als auch zum Zurücklesen und Vergleichen der zurückgelesenen Fülldaten mit den ursprünglichen Fülldaten eingerichtet sein.

Ähnliches wie für die Durchführung des Testbetriebes gilt auch für das Führen der Ausschlußliste. Hierfür kann eine externe Ausschlußlistenverwaltung ALV außerhalb des sicheren Rechners vorgesehen sein; eine alternativ oder zusätzlich vorgesehene Ausschlußlistenverwaltung liest die dem sicheren Rechner von der Datenvorverarbeitung zugeführten Datentelegramme mit und baut dabei die Ausschlußliste auf. Sie vergleicht die aktuellen Datentelegramme mit den bereits in der Liste hinterlegten Telegrammen und unterrichtet den sicheren Rechner von dabei ggf. entdeckten Telegrammwiederholungen. Der sichere Rechner seinerseits veranlaßt die Ausschlußlistenverwaltung dazu, Ausschlußlisten anzulegen, die aktuellen Telegramme auf Ausschluß zu prüfen und er veranlaßt auch das bedarfsweise Löschen einer Liste. Alternativ kann der Vergleichsvorgang auch im sicheren Rechner stattfinden, während die Liste in der Ausschlußlistenverwaltung geführt wird.

## Patentansprüche

1. Verfahren zum Verhindern der Einlagerung nicht mehr aktueller Datentelegramme aus einer Datenvorverarbeitung in die Speicher eines Rechners, welcher vorzugsweise als sicherer Rechner ausgebildet ist, wobei die nicht mehr aktuellen Datentelegramme von der Datenvorverarbeitung an den Rechner übermittelt wurden,
**dadurch gekennzeichnet,**
**daß** die Schreib-/Lese-Speicher (S1 bis S3) der Datenvorverarbeitung (DVV) während eines Testbetriebes mit einer dem Fassungsvermögen der Schreib-/Lese Speicher entsprechenden Mindestmenge von Fülldaten beschrieben werden, so daß alle zu Beginn des Testbetriebs in den Schreib-/Lese Speichern gespeicherten Daten gelöscht werden, und
**daß** die so gespeicherten Fülldaten anschließend wieder gelesen und mit den entsprechenden ursprünglichen Fülldaten auf inhaltliche Übereinstimmung verglichen werden.

2. Verfahren nach Anspruch 1,
**dadurch gekennzeichnet,**
**daß** die Funktion der Datenvorverarbeitung für die Dauer des Testbetriebes unterbrochen wird und daß in dieser Zeit eine Verkettung der Schreib-/Lese-Speicher der Datenvorverarbeitung zum seriellen Beschreiben mit den Fülldaten und zum seriellen Lesen dieser Daten stattfindet.

3. Verfahren nach Anspruch 1 oder 2,
**dadurch gekennzeichnet,**
**daß** die Fülldaten in einer Form dargestellt werden, die verschieden ist von den zu übermittelnden Daten und den Daten, die die Datenvorverarbeitung selbst zu generieren in der Lage ist.

4. Verfahren nach Anspruch 3,
**dadurch gekennzeichnet,**
**daß** die Fülldaten durch eine Aufeinanderfolge unterschiedlicher Primzahlen dargestellt werden.

5. Verfahren nach Anspruch 3,
**dadurch gekennzeichnet,**
**daß** die Fülldaten durch eine Aufeinanderfolge unterschiedlicher Zahlen in einem für den regulären Betrieb der Datenvorverarbeitung nicht verwendeten Zahlensystem dargestellt werden.

6. Verfahren nach einem der Ansprüche 1 bis 5,
**dadurch gekennzeichnet,**
**daß** die Aufnahme des Testbetriebes davon abhängig gemacht wird, daß alle regulär zu übermittelnden aktuellen Daten an den vorzugsweise sicheren Rechner übertragen wurden.

7. Verfahren nach Anspruch 6,
**dadurch gekennzeichnet,**
**daß** der Testbetrieb auf das Eintreffen aktueller Daten in der Datenvorverarbeitung abgebrochen wird.

8. Verfahren nach Anspruch 7,
**dadurch gekennzeichnet,**
**daß** das Eintreffen aktueller Daten dem vorzugsweise sicheren Rechner von der Datenvorverarbeitung angezeigt wird.

9. Verfahren nach einem der Ansprüche 1 bis 8,
**dadurch gekennzeichnet,**
**daß** zutreffendenfalls von der Datenvorverarbeitung eine Meldung mit der Bedeutung "Speicher voll" erzeugt wird und daß jede solche zur Unzeit erzeugte Meldung als Fehlverhalten der Datenvorverarbeitung eingestuft wird.

10. Verfahren nach einem der Ansprüche 1 bis 9,
**dadurch gekennzeichnet,**
**daß** außerhalb des Testbetriebes eine Ausschlußliste geführt wird, in die alle dann aus der Datenvorverarbeitung übernommenen Daten in Form von Datentelegrammen eingeschrieben werden,
**daß** jedes übermittelte Datentelegramm gegen die bereits gespeicherten Telegramme auf Ausschluß geprüft wird
und **daß** mit dem erfolgreichen Abschluß eines folgenden Testbetriebes alle bis dahin in der Ausschlußliste gespeicherten Telegramme gelöscht werden.

11. Verfahren nach Anspruch 10,
**dadurch gekennzeichnet,**
**daß** in die Ausschlußliste anstelle kompletter Datentelegramme daraus abgeleitete weniger aufwendige Daten eingeschrieben und diese dann mit den entsprechend modifizierten Daten später zugeführter Datentelegramme auf Ausschluß verglichen werden.

12. Verfahren nach Anspruch 11,
**dadurch gekennzeichnet,**
**daß** die in der Ausschlußliste abzuspeichernde Daten durch Checksummen über die Daten der Datentelegramme gebildet sind.

13. Einrichtung zum Verhindern der Einlagerung nicht mehr aktueller Datentelegramme aus einer Datenvorverarbeitung in die Speicher eines Rechners, wobei die nicht mehr aktuellen Datentelegramme von der Datenvorverarbeitung an den Rechner übermittelt wurden,
**dadurch gekennzeichnet,**
**daß** die Datenvorverarbeitung (DVV) auf entsprechende Anweisung des Rechners, welcher vorzugsweise als sicherer Rechner (R1, R2) ausgebildet ist, oder eines Überprüfungsautomaten (ÜA) zur Durchführung eines Testbetriebes ihre Schreib-/Lese-Speicher (S1, S2, S3) in Art eines FIFO's oder LIFO's umstrukturiert,
**daß** der Rechner oder der Überprüfungsautomat die Speicher im Anschluß daran seriell mit einer dem Fassungsvermögen der Speicher entsprechenden Menge von Fülldaten beschreibt, so
**daß** alle zu Beginn des Testbetriebs in den Speichern gespeicherten Daten gelöscht werden, und
**daß** nachfolgend der Rechner oder der Überprüfungsautomat die Speicher wieder liest, wobei er die gelesenen Daten mit den ursprünglichen Fülldaten auf inhaltliche Übereinstimmung vergleicht.

14. Einrichtung zum Verhindern der Einlagerung nicht mehr aktueller Datentelegramme aus einer Datenvorverarbeitung in die Speicher eines Rechners, wobei die nicht mehr aktuellen Datentelegramme von der Datenvorverarbeitung an den Rechner übermittelt wurden,
**dadurch gekennzeichnet,**
**daß** die Datenvorverarbeitung (DW) auf entsprechende Anweisung des Rechners, welcher vorzugsweise als sicherer Rechner (R1, R2) ausgebildet ist, oder eines Überprüfungsautomaten (ÜA) zur Durchführung eines Testbetriebes ihre Schreib-/Lese-Speicher (S1, S2, S3) in Art eines Schieberegisters umstrukturiert,
**daß** der Rechner oder der Überprüfungsautomat die Speicher im Anschluß daran seriell mit einer dem Fassungsvermögen der Speicher entsprechenden Menge von Fülldaten beschreibt, so
**daß** alle zu Beginn des Testbetriebs in den Speichern gespeicherten Daten gelöscht werden, und
**daß** nachfolgend der Rechner oder der Überprüfungsautomat seriell weitere, von den Fülldaten verschiedene Daten mit einer dem Fassungsvermögen der Speicher entsprechenden Menge nachschreibt, und die dabei seriell am Ausgang (S30) des Schieberegisters erscheinenden Daten wieder liest, wobei er die gelesenen Daten mit den ursprünglichen Fülldaten auf inhaltliche Übereinstimmung vergleicht.

15. Einrichtung nach Anspruch 13 oder 14,
**dadurch gekennzeichnet,**
**daß** die Datenvorverarbeitung dem Rechner und/oder dem Überprüfungsautomaten eine Kennung übermittelt, die diesen davon unterrichtet, daß in der Datenvorverarbeitung keine regulär zur Übermittlung anstehenden aktuellen Daten mehr vorliegen und daß diese Kennung den Rechner oder den Überprüfungsautomaten in die Lage versetzt, den Testbetrieb zur Funktionsprüfung der Datenvorverarbeitung aufzunehmen.

16. Einrichtung nach Anspruch 13 oder 14,
**dadurch gekennzeichnet,**
**daß** die Datenvorverarbeitung mit dem Erkennen des Lesens ihres letzten Speicherplatzes das Ende des Testbetriebes erkennt und ihre Speicher wieder in den Normalzustand umstrukturiert.

17. Einrichtung nach Anspruch 13 oder 14,
**dadurch gekennzeichnet,**
**daß** der Rechner oder der Überprüfungsautomat die Datenvorverarbeitung vom erfolgreichen Abschluß des Testbetriebes unterrichtet, wobei die Datenvorverarbeitung daraufhin ihre Schreib-/Lese-Speicher wieder in den Normalzustand umstrukturieren kann.

18. Einrichtung nach einem der Ansprüche 13 bis 17,
**dadurch gekennzeichnet,**
**daß** die Datenvorverarbeitung (DVV) durch einen Mikrocontroller dargestellt ist.

19. Einrichtung nach Anspruch 18,
**dadurch gekennzeichnet,**
**daß** die Schreib-/Lese-Speicher (S1, S2, S3) sowohl die Arbeitsspeicher als auch die CPU-Register des Microcontrollers beinhalten.

20. Einrichtung nach einem der Ansprüche 13 bis 19,
**dadurch gekennzeichnet,**
**daß** der Rechner außerhalb des Testbetriebes intern oder außerhalb des Rechners eine Ausschlußliste führt, in die er alle dann aus der Datenvorverarbeitung übernommenen Datentelegramme einschreibt, daß er jedes übermittelte Datentelegramm gegen die in der Ausschlußliste bereits gespeicherten Telegramme auf Ausschluß prüft, und
**daß** er mit dem erfolgreichen Ende eines erneuten Testbetriebes alle in der Ausschlußliste gespeicherten Telegramme löscht.

21. Einrichtung nach einem der Ansprüche 13 bis 19,
**dadurch gekennzeichnet,**
**daß** eine externe Ausschlußlistenverwaltung (ALV) außerhalb des Rechners vorgesehen ist, die außerhalb des Testbetriebes eine Ausschlußliste führt, in die sie alle dann aus der Datenvorverarbeitung in den Rechner übernommenen Datentelegramme einschreibt, daß sie jedes dieser Datentelegramme gegen die bereits in der Ausschlußliste gespeicherten Telegramme auf Ausschluß prüft, und
**daß** sie auf Anforderung des Rechners oder des Überprüfungsautomaten die bei ihr geführte Ausschlußliste löscht.

22. Einrichtung nach Anspruch 20 oder 21,
**dadurch gekennzeichnet,**
**daß** der Rechner auf einem Fahrzeug angeordnet ist, das u. a. dazu eingerichtet ist, über die Datenvorverarbeitung Datentelegramme von gleisseitigen Übertragungseinrichtungen zu empfangen, und das mindestens bei Fahrrichtungsumkehr eine Überprüfung der Datenvorverarbeitung vornimmt, um bei erfolgreich durchgeführtem Testbetrieb die beim Rechner oder der externes Ausschlußlistenverwaltung geführte Ausschlußliste zu löschen.

## Claims

1. Method of preventing the transfer of no longer current data telegrams from a data pre-processing device into the memories of a computer that is preferably constructed as a secure computer, the no longer current data telegrams having been transmitted from the data pre-processing device to the computer, **characterized in that** a minimum amount of filler data corresponding to the capacity of the write/read memories is written into the write/read memories (S1 to S3) of the data pre-processing device (DVV) during a test mode so that all the data stored at the beginning of the test mode in the write/read memories are erased, and **in that** said stored filler data are then read again and compared with the corresponding original filler data for conformity of content.

2. Method according to Claim 1, **characterized in that** the function of the data pre-processing device is interrupted for the duration of the test mode and **in that**, in this time, a concatenation of the write/read memories of the data pre-processing device takes place for serially writing in said filler data and for serially reading said data.

3. Method according to Claim 1 or 2, **characterized in that** the filler data are presented in a form that is different from the data to be transmitted and the data that the data pre-processing device is capable of generating itself.

4. Method according to Claim 3, **characterized in that** the filler data are represented by a sequence of different primary numbers.

5. Method according to Claim 3, **characterized in that** the filler data are represented by a sequence of different numbers in a number system not used for the regular operation of the data pre-processing device.

6. Method according to one of Claims 1 to 5, **characterized in that** the initiation of the test mode is made dependent on all the current data to be transmitted regularly being transmitted to the preferably secure computer.

7. Method according to Claim 6, **characterized in that** the test mode is terminated when current data is received in the data pre-processing device.

8. Method according to Claim 7, **characterized in that** the receipt of current data is indicated to the preferably secure computer by the data pre-processing device.

9. Method according to one of Claims 1 to 8, **characterized in that**, if appropriate, a message having the meaning "memory full" is generated by the data pre-processing device and **in that** every such message generated at an inopportune moment is classified as incorrect behaviour of the data pre-processing device.

10. Method according to one of Claims 1 to 9, **characterized in that** an exclusion list is kept outside the test mode into which all the data then transferred from the data pre-processing device are written in the form of data telegrams,
**in that** every data telegram transmitted is tested for exclusion against the telegrams already stored and **in that**, with the successful termination of a subsequent test mode, all the telegrams stored in the exclusion list up to that point are erased.

11. Method according to Claim 10, **characterized in that**, instead of complete data telegrams, less sophisticated data derived therefrom are written into the exclusion list and these are then compared with the correspondingly modified data of data telegrams supplied later for exclusion.

12. Method according to Claim 11, **characterized in that** the data to be stored in the exclusion list are formed by checksums over the data of the data telegrams.

13. Device for preventing the transfer of no longer current data telegrams from a data pre-processing device into the memories of a computer, the no longer current data telegrams having been transmitted from the data pre-processing device to the computer, **characterized in that** the data pre-processing device (DVV) restructures its write/read memories (S1, S2, S3) in the fashion of a FIFO or LIFO for the purpose of performing a test mode on an appropriate instruction from the computer, which is preferably constructed as a secure computer (R1, R2), or of an automatic check-up (ÜA), **in that** the computer or the automatic checker serially writes an amount of filler data corresponding to the capacity of the memories into the memories subsequently thereto so that all the data stored in the memories at the beginning of the test mode are erased and **in that**, subsequently, the computer or the automatic checker reads the memory again, in which process it compares the data read with the original filler data for conformity in content.

14. Device for preventing the transfer of no longer current data telegrams from a data pre-processing device into the memories of a computer, the no longer current data telegrams having been transmitted from the data pre-processing device to the computer, **characterized in that** the data pre-processing device (DVV) restructures its write/read memories (S1, S2, S3) in the fashion of a shift register for the purpose of performing a test mode on an appropriate instruction from the computer, which is preferably constructed as a secure computer (R1, R2), or of an automatic checker (ÜA), **in that**, subsequently thereto, the computer or the automatic checker serially writes an amount of filler data corresponding to the capacity of the computer into the memories so that all the data stored in the memories at the beginning of the test mode are erased and **in that**, subsequently, the computer or the automatic checker additionally writes serially further data, different from the filler data, in an amount corresponding to the capacity of the memories and reads the data appearing serially during this process at the output (S30) of the shift register again, in which process it compares the data read with the original filler data for conformity of content.

15. Device according to Claim 13 or 14, **characterized in that** the data pre-processing device transmits to the computer and/or the automatic checker an identifier that informs the latter that current data regularly present for transmission are no longer present in the data processing device and **in that** said identifier enables the computer or the automatic checker to initiate the test mode for functionally testing the data preprocessing device.

16. Device according to Claim 13 or 14, **characterized in that** the data pre-processing device detects the end of the test mode with the detection of the reading of its last memory location and restructures its memories to the normal state again.

17. Device according to Claim 13 or 14, **characterized in that** the computer or the automatic checker informs the data preprocessing device of the successful termination of the test mode, in which case the data pre-processing device thereupon restructures its write/read memories to the normal state again.

18. Device according to one of Claims 13 to 17, **characterized in that** the data pre-processing device (DVV) is represented by a microcontroller.

19. Device according to Claim 18, **characterized in that** the write/read memories (S1, S2, S3) contain both the main memories and the CPU registers of the microcontroller.

20. Device according to one of Claims 13 to 19, **characterized in that** the computer keeps, outside the test mode, internally or outside the computer an exclusion list into which it writes all the data telegrams then transferred from the data pre-processing device, **in that** it tests every data telegram transmitted against the telegrams already stored in the exclusion list for exclusion, and **in that**, with the successful completion of a repeat test mode, it erases all the telegrams stored in the exclusion list.

21. Device according to one of Claims 13 to 19, **characterized in that** an external exclusion list management (ALV) is provided outside the computer that keeps, outside the test mode, an exclusion list into which it writes all the data telegrams then transferred from the data pre-processing unit into the computer, **in that** it tests each of said data telegrams against the telegrams already stored in the exclusion list for exclusion and **in that**, at the request of the computer or of the automatic checker, it erases the exclusion list it keeps.

22. Device according to Claim 20 or 21, **characterized in that** the computer is disposed on a vehicle that is designed, inter alia, to receive, via the data pre-processing device, data telegrams from trackside transmission devices and that, at least during reversal of the direction of travel, undertakes a check of the data pre-processing device in order, in the case of a successfully performed test mode, to erase the exclusion list kept in the computer or the external exclusion list management.

## Revendications

1. Procédé pour empêcher le stockage de télégrammes de données qui ne sont plus actuels et qui proviennent d'un préprocesseur de données dans la mémoire d'un ordinateur qui est conçu de préférence comme un ordinateur sûr, les télégrammes de données qui ne sont plus actuels ayant été transmis par le préprocesseur de données à l'ordinateur,
**caractérisé par le fait que**
pendant un fonctionnement de test, on écrit dans les mémoires de lecture-écriture (S1 à S3) du préprocesseur de données (DVV) une quantité minimale, correspondant à la capacité des mémoires de lecture-écriture, de données de remplissage de telle sorte que toutes les données mémorisées dans les mémoires de lecture-écriture au début du fonctionnement de test sont effacées, et
on relit ensuite les données de remplissage ainsi mémorisées et on les compare aux données de remplissage initiales correspondantes pour détecter si les contenus coïncident.

2. Procédé selon la revendication 1,
**caractérisé par le fait qu'**on interrompt la fonction du préprocesseur de données pour la durée du fonctionnement de test et que, pendant ce temps, un chaînage des mémoires de lecture-écriture du préprocesseur de données a lieu pour l'écriture sérielle des données de remplissage et pour la lecture sérielle de ces données.

3. Procédé selon la revendication 1 ou 2,
**caractérisé par le fait qu'**on représente les données de remplissage sous une forme qui est différente des données à transmettre et des données que le préprocesseur de données est lui-même capable de produire.

4. Procédé selon la revendication 3,
**caractérisé par le fait qu'**on représente les données de remplissage par une succession de différents nombres premiers.

5. Procédé selon la revendication 3,
**caractérisé par le fait qu'**on représente les données de remplissage par une succession de différents nombres dans un système numérique non utilisé pour le fonctionnement normal du préprocesseur de données.

6. Procédé selon l'une des revendications 1 à 5,
**caractérisé par le fait qu'**on rend le déclenchement du fonctionnement de test dépendant du fait que toutes les données actuelles à transmettre normalement ont été transmises à l'ordinateur sûr de préférence.

7. Procédé selon la revendication 6,
**caractérisé par le fait qu'**on interrompt le fonctionnement de test lors de l'arrivée de données actuelles dans le préprocesseur de données.

8. Procédé selon la revendication 7,
**caractérisé par le fait que** le préprocesseur de données indique l'arrivée de données actuelles à l'ordinateur sûr de préférence.

9. Procédé selon l'une des revendications 1 à 8,
**caractérisé par le fait que**, lorsque c'est le cas, le préprocesseur de données produit un message avec la signification "mémoire pleine" et qu'on classe tout message produit à contretemps comme erreur de comportement du préprocesseur de données.

10. Procédé selon l'une des revendications 1 à 9,
**caractérisé par le fait que**
en dehors du fonctionnement de test, on gère une liste d'exclusion dans laquelle on enregistre toutes les données reçues du préprocesseur de données sous la forme de télégrammes de données,
on teste chaque télégramme de données transmis quant à une éventuelle exclusion par rapport aux télégrammes déjà mémorisés
et, lorsqu'un fonctionnement de test suivant se termine avec succès, on efface tous les télégrammes mémorisés jusque là dans la liste d'exclusion.

11. Procédé selon la revendication 10,
**caractérisé par le fait qu'**on enregistre dans la liste d'exclusion, à la place de télégrammes de données complets, des données moins complètes déduites de ces télégrammes et on compare ensuite celles-ci aux données, modifiées en conséquence, de télégrammes de données envoyés ultérieurement afin de détecter une éventuelle exclusion.

12. Procédé selon la revendication 11,
**caractérisé par le fait qu'**on forme les données à mémoriser dans la liste d'exclusion à partir de sommes de contrôle sur les données des télégrammes de données.

13. Dispositif pour empêcher le stockage de télégrammes de données qui ne sont plus actuels et qui proviennent d'un préprocesseur de données dans les mémoires d'un ordinateur, les télégrammes de données qui ne sont plus actuels ayant été transmis par le préprocesseur de données à l'ordinateur,
**caractérisé par le fait que**
suite à une indication correspondante de l'ordinateur conçu de préférence comme un ordinateur sûr (R1, R2) ou d'un automate de test (ÜA) pour la mise en oeuvre d'un fonctionnement de test, le préprocesseur de données (DVV) restructure des mémoires de lecture-écriture (S1, S2, S3) sous la forme d'une FIFO ou d'une LIFO,
l'ordinateur ou l'automate de test écrit ensuite en série dans les mémoires une quantité de données de remplissage qui correspond à la capacité des mémoires de telle sorte que toutes les données mémorisées dans les mémoires au début du fonctionnement de test sont effacées, et
l'ordinateur ou l'automate de test relit ensuite les mémoires et il compare les données lues aux données de remplissage initiales pour détecter si les contenus coïncident.

14. Dispositif pour empêcher le stockage de télégrammes de données qui ne sont plus actuels et qui proviennent d'un préprocesseur de données dans les mémoires d'un ordinateur, les télégrammes de données qui ne sont plus actuels ayant été transmis par le préprocesseur de données à l'ordinateur,
**caractérisé par le fait que**
suite à une indication correspondante de l'ordinateur conçu de préférence comme un ordinateur sûr (R1, R2) ou d'un automate de test (ÜA) pour la mise en oeuvre d'un fonctionnement de test, le préprocesseur de données (DVV) restructure des mémoires de lecture-écriture (S1, S2, S3) sous la forme d'un registre à décalage,
l'ordinateur ou l'automate de test écrit ensuite en série dans les mémoires une quantité de données de remplissage qui correspond à la capacité des mémoires de telle sorte que toutes les données mémorisées dans les mémoires au début du fonctionnement de test sont effacées, et
l'ordinateur ou l'automate de test écrit ensuite en série d'autres données, différentes des données de remplissage, en une quantité correspondant à la capacité des mémoires, il relit les données apparaissant alors en série à la sortie (S30) du registre à décalage et il compare alors les données lues aux données de remplissage initiales pour détecter si les contenus coïncident.

15. Dispositif selon la revendication 13 ou 14,
**caractérisé par le fait que**
le préprocesseur de données transmet à l'ordinateur et/ou à l'automate de test une indication qui informe celui-ci du fait qu'il n'existe plus dans le préprocesseur de données aucune donnée actuelle à transmettre normalement
et cette indication met l'ordinateur ou l'automate de test en situation de mettre en oeuvre le fonctionnement de test pour tester les fonctions du préprocesseur de données.

16. Dispositif selon la revendication 13 ou 14,
**caractérisé par le fait que**, lorsqu'il reconnaît la lecture de son dernier emplacement de mémoire, le préprocesseur de données reconnaît la fin du fonctionnement de test et restructure ses mémoires dans leur état normal.

17. Dispositif selon la revendication 13 ou 14,
**caractérisé par le fait que** l'ordinateur ou l'automate de test informe le préprocesseur de données de la fin avec succès du fonctionnement de test, le préprocesseur de données pouvant alors restructurer ses mémoires de lecture-écriture dans leur état normal.

18. Dispositif selon l'une des revendications 13 à 17,
**caractérisé par le fait que** le préprocesseur de données (DVV) est représenté par un microcontrôleur.

19. Dispositif selon la revendication 18,
**caractérisé par le fait que** les mémoires de lecture-écriture (S1, S2, S3) contiennent aussi bien les mémoires de travail que les registres CPU du microcontrôleur.

20. Dispositif selon l'une des revendications 13 à 19,
**caractérisé par le fait que**
en dehors du fonctionnement de test, l'ordinateur gère en interne ou en dehors de l'ordinateur une liste d'exclusion dans laquelle il enregistre tous les télégrammes de données reçus du préprocesseur de données,
il teste chaque télégramme de données transmis quant à une éventuelle exclusion par rapport aux télégrammes déjà mémorisés dans la liste d'exclusion, et
lorsqu'un nouveau fonctionnement de test se termine avec succès, il efface tous les télégrammes mémorisés dans la liste d'exclusion.

21. Dispositif selon l'une des revendications 13 à 19,
**caractérisé par le fait que**
il est prévu en dehors de l'ordinateur une gestion de liste d'exclusion (ALV) externe qui gère en dehors du fonctionnement de test une liste d'exclusion dans laquelle elle enregistre tous les télégrammes de données reçus du préprocesseur de données dans l'ordinateur,
elle teste chacun de ces télégrammes de données transmis quant à une éventuelle exclusion par rapport aux télégrammes déjà mémorisés dans la liste d'exclusion, et
à la demande de l'ordinateur ou de l'automate de test, elle efface la liste d'exclusion qu'elle gère.

22. Dispositif selon la revendication 20 ou 21,
**caractérisé par le fait que** l'ordinateur est placé dans un véhicule qui est conçu entre autres pour recevoir par l'intermédiaire du préprocesseur de données des télégrammes de données provenant de dispositifs de transmission côté voie et qui, au moins lors d'une inversion de direction d'avance, effectue un test du préprocesseur de données pour, si le fonctionnement de test s'est terminé avec succès, effacer la liste d'exclusion gérée dans l'ordinateur ou dans la gestion de liste d'exclusion externe.
